(19) **Europäisches Patentamt**

**European Patent Office**

**Office européen des brevets**

(11) Veröffentlichungsnummer: **0 026 306**
**B1**

(12) **EUROPÄISCHE PATENTSCHRIFT**

(45) Veröffentlichungstag der Patentschrift:
07.03.84

(51) Int. Cl.³: **B 60 T 13/14**, B 60 T 13/22

(21) Anmeldenummer: 80104774.7

(22) Anmeldetag: 12.08.80

(54) Hydraulische Bremse, insbesondere für land- und forstwirtschaftliche Anhänger.

(30) Priorität: 20.09.79 DE 2938089

(43) Veröffentlichungstag der Anmeldung:
08.04.81 Patentblatt 81/14

(45) Bekanntmachung des Hinweises auf die Patenterteilung:
07.03.84 Patentblatt 84/10

(84) Benannte Vertragsstaaten:
AT BE CH DE FR GB IT LI NL SE

(56) Entgegenhaltungen:
DE - A - 1 455 794
DE - A - 2 008 052
DE - A - 2 645 470
DE - A - 2 726 514
GB - A - 887 617

(73) Patentinhaber: Johann Gassner K.G., Post
Grosshelfendorf, D-8011 Göggenhofen (DE)

(72) Erfinder: Gassner, Johann, jun., Haus Nr. 10,
D-8011 Göggenhofen (DE)

(74) Vertreter: Lamprecht, Helmut, Dipl.-Ing.,
Corneliusstrasse 42, D-8000 München 5 (DE)

# Hydraulische Bremse, insbesondere für land- und forstwirtschaftliche Anhänger

Die Erfindung betrifft eine hydraulische Bremse, insbesondere für schleppergezogene land- und forstwirtschaftliche Anhänger, mit einem einer Druckquelle nachschaltbaren Bremsventil, einem Bremszylinder und einer das Bremsventil mit dem Bremszylinder verbindenden Bremsleitung, wobei der Kolben in Richtung auf seine Bremsstellung ständig durch einen Kraftspeicher belastet und in der Gegenrichtung aus der Bremsleitung beaufschlagbar ist, die Bremsleitung mit der Druckquelle und über ein Druckregelventil mit einem Rücklauf zur Druckquelle verbunden, sowie bei Bremsbetätigung über das dann geöffnete Bremsventil direkt mit dem Rücklauf verbindbar ist, und das Druckregelventil derart ausgelegt ist, dass es bei ungeöffnetem Bremsventil den Druck in der Bremsleitung grösser hält als die Kraft des Kraftspeichers.

Bei dieser Konstruktion, wie sie prinzipiell aus der GB-A-887 617 bekannt ist, wird die Bremswirkung durch die ständig vorhandene Kraft des Kraftspeichers erzielt, die immer dann wirksam wird, wenn der Druck in der Bremsleitung unter die vom Kraftspeicher ausgeübte Kraft absinkt. Da die vom Kraftspeicher ausgeübte Kraft ständig zur Verfügung steht, weil das Lösen der Bremse nur dadurch möglich ist, dass der Druck in der Bremsleitung erhöht wird, wodurch der Kraftspeicher stets erneut bis zum Erreichen seiner Betriebskraft gespannt wird, können beliebig viele Bremsvorgänge durchgeführt werden, ohne dass die im Kraftspeicher zur Verfügung stehende Bremskraft erschöpft wird.

Diese Bremse eignet sich deshalb besonders für die Anwendung bei land- und forstwirtschaftlichen Anhängern, weil sie grosse Betriebssicherheit mit einem minimalen Anspruch an Wartung und Pflege verbindet und weil sie sich auch als Feststellbremse eignet. Es muss lediglich vor dem Verlassen des Fahrzeugs nach dem Abschalten des Motors, der die Druckquelle betreibt, kurz das Bremspedal betätigt werden, um den Lösedruck in der Bremsleitung abzubauen, so dass der Kraftspeicher wirksam wird und die erforderliche Bremskraft ausübt.

Wenn allerdings diese letzte Betätigung des Bremspedals unterbleibt oder bei der Betätigung des Bremspedals der Motor noch nicht abgeschaltet ist und sich somit beim Freigeben des Bremspedals erneut ein Lösedruck in der Leitung aufbauen kann, dauert es verhältnismässig lange Zeit, bis sich der Druck in der Bremsleitung soweit abgebaut hat, dass die Bremse anspricht.

Der Erfindung liegt die Aufgabe zugrunde, auch für diesen Fall eine Bremswirkung zu erreichen und damit die Zuverlässigkeit der Bremse weiter zu verbessern.

Die Lösung dieser Aufgabe besteht darin, dass das Druckregelventil durch eine Drosselöffnung zwischen Bremsleitung und Rücklauf überbrückt ist.

Dadurch tritt beim Stillsetzen des Motors des Zugfahrzeugs ein baldiger Druckabfall in der Bremsleitung ein, der zu einer Bremsbetätigung führt, auch wenn beim Abstellen des Motors das Bremspedal nicht betätigt wird. Sobald der Motor wieder in Betrieb gesetzt wird, baut sich der zum Lösen der Bremse erforderliche Druck in der Bremsleitung sofort wieder auf, weil die Druckquelle jederzeit in der Lage ist, die über die Drosselöffnung abströmende Menge des Hydraulikmediums sofort zu ersetzen.

Die Bremse lässt sich also vorteilhaft als Anhängerbremse verwenden, wobei das Bremsventil, das Druckregelventil und die Drosselöffnung an einem Zugfahrzeug, vorzugsweise in einem gemeinsamen Gehäuse, der Bremszylinder und der Kraftspeicher an einem Anhänger angeordnet sind.

Eine besonders vorteilhafte Ausbildung besteht darin, dass der Kraftspeicher als mechanischer Kraftspeicher, nämlich als Federspeicher, ausgebildet ist, weil die durch eine mechanische Feder erzeugte Bremskraft auch bei längerem Stillstand des abzubremsenden Anhängers zuverlässig zur Verfügung steht und nicht der Gefahr ausgesetzt ist, durch Leckverluste nachzulassen.

Noch eine weitere vorteilhafte Ausbildung ist es, dass der Anhänger mit einem Ölvorrat und einer diesem Ölvorrat zugeordneten Handpumpe versehen ist, an welche der am Anhänger befindliche Teil der Bremsleitung nach dem Lösen vom schlepperseitigen Teil der Bremsleitung ankuppelbar ist, und dass die Handpumpe mit einem Rücklaufventil zur Verbindung der Bremsleitung mit dem Ölvorrat versehen ist. Hierdurch wird es möglich, beim abgestellten, vom Schlepper getrennten und gebremsten Anhänger die Bremse vorübergehend zum Manövrieren zu lösen und durch Öffnung des Rücklaufventils die Bremse wieder anzuziehen.

Eine weitere zweckmässige Ausgestaltung besteht darin, dass die lösbare Kupplung an dem dem Zugfahrzeug zugewandten Ende eines Verbindungsabschnitts der Bremsleitung angeordnet und als nur in druckfreiem Zustand durch Zug lösbare und in gelöstem Zustand die Leitung sperrende Kupplung ausgebildet ist, dass an dem dem Anhänger zugewandten Ende des Verbindungsabschnitts eine sich beim Überschreiten einer vorgegebenen Zugbelastung trennende Kupplung angeordnet ist, und dass die beiden durch Zug trennbaren Teilstücke der dem Anhänger zugewandten Kupplung von einem die Bremsleitung dicht umschliessenden, zumindest auf einem der durch diese Kupplung verbundenen Bremsleitungsabschnitte verschieblichen Ölauffangbehälter umschlossen sind. Durch diese Konstruktion wird verhindert, dass beim Abreissen der Bremsleitung zwischen Zugfahrzeug und Anhänger Öl austreten kann. Wenn eine übermässige Zugkraft auftritt, wird sich zunächst die vom Ölauffangbehälter umschlossene Kupplung lösen, wodurch die Bremsleitung druckfrei wird und sich anschliessend die dem Zugfahrzeug zugewandte Kupplung lösen kann.

Für die nachträgliche Umrüstung von Anhängern ist es vorteilhaft, dass der Bremszylinder mit dem Kraftspeicher auf einem an einer Fahrzeugachse befestigbaren Lagerbock angeordnet ist.

Weitere zweckmässige Ausgestaltungen ergeben sich aus den Unteransprüchen in Verbindung mit der Beschreibung.

Anhand der nun folgenden Beschreibung eines in der Zeichnung dargestellten Ausführungsbeispiels der Erfindung wird diese näher erläutert.

Es zeigt:

Fig. 1 in schematischer Darstellung eine Anhängerbremse mit den am Zugfahrzeug und am Anhänger anzuordnenden Teilen in ungebremster Stellung mit einem als Gasdruckspeicher ausgebildeten Kraftspeicher,

Fig. 2 eine der Fig. 1 entsprechende Darstellung einer Anhängerbremse in gebremsten Zustand,

Fig. 3 einen Schnitt durch eine Anbaueinheit für Anhänger mit einer Zugfeder als Kraftspeicher, montiert auf eine Anhängerachse und

Fig. 4 schematisch einen Bremsleitungsabschnitt zwischen Zugfahrzeug und Anhänger.

In der Zeichnung bezeichnet 10 eine Bremsleitung, die sich aus zwei Teilstücken 10a und 10b zusammensetzt, die mittels einer Kupplung 12 verbindbar sind. Das Teilstück 10a ist mit einem Steuergehäuse 14 verbunden, das am nicht dargestellten Zugfahrzeug angeordnet ist und trägt ein Kupplungsstück 12a.

Das Teilstück 10b der Bremsleitung 10 ist mit einem am Anhänger angeordneten Bremszylinder 16 verbunden und trägt ein Kupplungsteilstück 12b.

Das Steuergehäuse 14 besitzt drei Anschlüsse 18, 20 und 22. Der Anschluss 18 steht mit der hydraulischen Druckquelle des Zugfahrzeugs, z.B. dem Hydrauliksystem eines Schleppers, in Verbindung. Der Anschluss 18 ist über einen Kanal 24 direkt mit dem Anschluss 20 verbunden, an welchen das Bremsleitungsteilstück 10a angeschlossen ist. Der Anschluss 22 ist mit einer Rücklaufleitung 26 verbunden, die die Hydraulikflüssigkeit wieder der nicht gezeigten Druckquelle zuführt. Im Inneren des Steuergehäuses 14 steht der Anschluss 22 über einen Kanal 28 und ein Druckregelventil 30 einerseits, sowie über einen Kanal 32 und ein Bremsventil 34 andererseits mit dem Kanal 24 und damit mit den Anschlüssen 18 und 20 in Verbindung.

Das Bremsventil 34 ist im Ruhezustand geschlossen und kann bei Betätigung eines Bremspedals 36 mehr oder weniger weit geöffnet werden, so dass der im Kanal 24 und der Bremsleitung 10 vorhandene, durch das Druckregelventil 30 beispielsweise auf 35 bar eingestellte Druck wahlweise mehr oder weniger abgesenkt werden kann.

Das Druckregelventil 30 und damit praktisch auch das Bremsventil 34 werden durch eine Drosselöffnung 38 überbrückt, die den Kanal 24 unmittelbar mit den Kanälen 28 und 32 und damit mit der Rücklaufleitung 26 verbindet. Der Querschnitt dieser Drosselöffnung 38 ist derart bemessen, dass der Druckverlust praktisch vernachlässigbar ist, solange die Druckquelle die Bremsleitung 10 mit Druck beaufschlagt, dass aber dann, wenn eine Druckergänzung über den Anschluss 18 nicht stattfindet, beispielsweise bei abgeschaltetem Motor des Zugfahrzeugs, der Druckverlust über die Drosselöffnung 38 den Druck in der Bremsleitung 10 soweit absenkt, dass in der nachfolgend noch näher erläuterten Weise eine Bremsung des Anhängers stattfindet.

Statt der in der Zeichnung dargestellten Drosselöffnung 38 ist es beispielsweise auch möglich, im Ventilsitz des Bremsventils 34 eine Kerbe anzuordnen, die bei geschlossenem Bremsventil 34 als Drosselöffnung wirkt.

Der Bremszylinder 16 ist als doppel wirkender Zylinder ausgebildet und enthält einen Kolben 40, der an einer Seite mit einer Kolbenstange 42 verbunden ist, die aus dem Bremszylinder 16 herausgeführt und mit einem nicht dargestellten Bremsgestänge üblicher Bauart verbunden ist. Durch den Kolben 40 werden zwei Zylinderkammern 44 und 46 voneinander getrennt, welche beide jeweils mit einem Anschluss 48 bzw. 50 versehen sind. Die dem Anschluss 48 zugeordnete Zylinderkammer 44 wird von der Kolbenstange 42 durchquert. Die dieser Zylinderkammer 44 zugewandte erste Kolbenseite 52 besitzt eine durch die Kolbenstange 42 gegenüber der der Zylinderkammer 46 zugewandten zweiten Kolbenseite 54 verringerte wirksame Oberfläche.

Die Bremsleitung 10 ist unmittelbar über den Anschluss 50 mit der Zylinderkammer 46 verbunden und ist ausserdem über ein Rückschlagventil 56 mit der Kolbenkammer 44 verbunden, wobei das Rückschlagventil 56 derart angeordnet ist, dass es durch einen Überdruck in der Bremsleitung 10 geöffnet werden kann.

Der Anschluss 48 ist ausserdem unmittelbar mit einem Kraftspeicher 58 verbunden, der beim gezeigten Beispiel in Form eines Gasdruckspeichers dargestellt ist, wobei das Gaspolster beispielsweise auch durch eine mechanische Druckfeder ersetzt sein kann.

Das Rückschlagventil 56 wird durch ein sich in entgegengesetzter Richtung wie das Rückschlagventil 56 öffnendes Überdruckventil 60 überbrückt, dessen Bedeutung nachstehend noch erläutert wird.

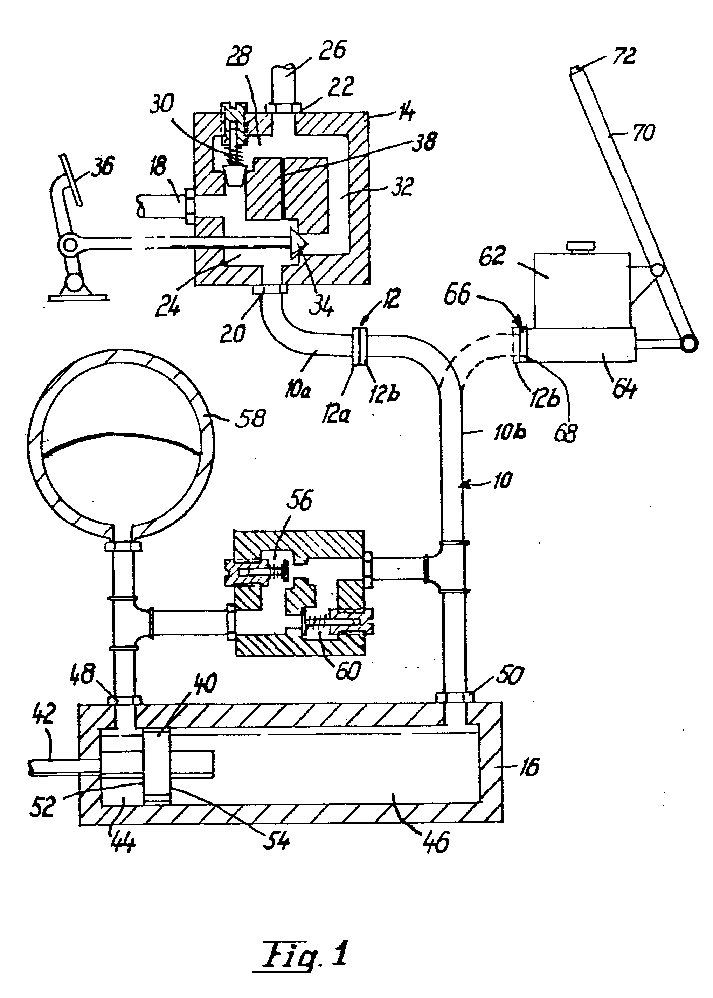

Wird das Bremspedal 36 nicht betätigt, so bleibt das Bremsventil 34 in der aus Fig. 1 ersichtlichen geschlossenen Stellung und es baut sich in der Bremsleitung 10 der durch das Druckregelventil 30 bestimmte Druck von beispielsweise 35 bar auf.

Dieser Druck wird über den Anschluss 50 in der Zylinderkammer 46 wirksam und überwindet ausserdem den geringeren Gegendruck von beispielsweise 25 bar des Druckspeichers 58, so dass sich das Rückschlagventil 56 öffnet und der Druck der Bremsleitung auch über den Anschluss 48 in der Zylinderkammer 44 wirksam wird. Weil die der Zylinderkammer 44 zugewandte erste Kolbenseite 52 eine geringere wirksame Fläche hat als die der Zylinderkammer 46 zugewandte zweite Kolbenseite 54 wird der Kolben 40 und damit die Kolbenstange 42 in die aus Fig. 1 ersichtliche linke Endstellung bewegt, in welcher sich das nicht dargestellte Bremsgestänge in seiner Lösestellung befindet.

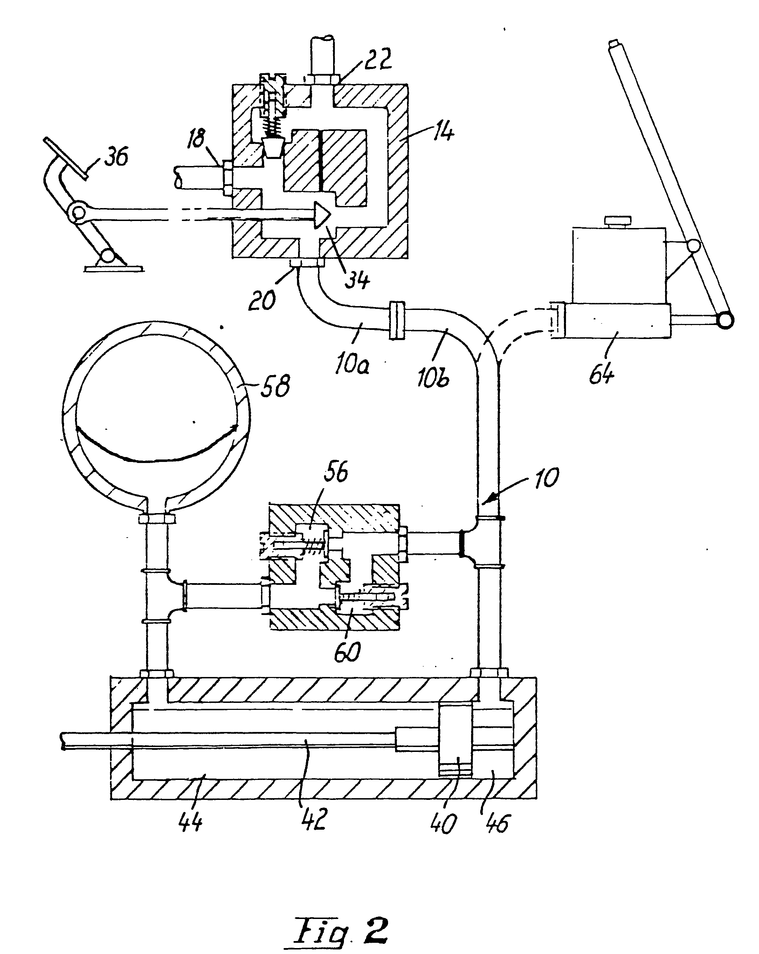

Sobald der Druck in der Bremsleitung 10 unter den Druck des Kraftspeichers 58 absinkt, wird das Rückschlagventil 56 geschlossen. Da der Unterschied der wirksamen Flächen der ersten Kolbenseite 52 und der zweiten Kolbenseite 54 relativ gering ist, bedarf es nur eines geringen Druckabfalls in der Bremsleitung 10, bis die auf die erste Kolbenseite 52 einwirkende, durch den Druck des Kraftspeichers 58 verursachte Kraft die Gegenkraft in der Zylinderkammer 46 überwindet und den Kolben 40 zusammen mit der Kolbenstange 42 nach rechts in die aus Fig. 2 ersichtliche Bremsstellung bewegt. Die Bremswirkung kann dabei durch die Beeinflussung des Druckabfalls in der Bremsleitung 10 über das Bremsventil 34 gesteuert werden.

Der für die Bremswirkung erforderliche Druckabfall in der Bremsleitung 10 kann im Regelfall durch Betätigung des Bremspedals 36 und mehr oder weniger weite Öffnung des Bremsventils 34 herbeigeführt werden. Bei geöffnetem Bremsventil 34 steht die Bremsleitung 10 über einen ausreichend grossen Querschnitt mit der Rücklaufleitung 26 in Verbindung, so dass ein wirksamer Druckabfall in der Bremsleitung 10 eintritt.

Wird das Bremsventil 34 wieder geschlossen, baut sich sofort wieder der durch das Druckregelventil 30 eingestellte Lösedruck in der Bremsleitung 10 auf und die auf die zweite Kolbenseite 54 einwirkende Kraft überwindet die aus dem Druck des Kraftspeichers 58 resultierende Gegenkraft auf die erste Kolbenseite 52. Der Kolben 40 wird wieder nach links bewegt, dabei erhöht sich der Druck auf der Seite der Zylinderkammer 44 wobei ausserdem das Rückschlagventil 56 geöffnet wird und sich schliesslich auf beiden Seiten des Rückschlagventils der durch das Druckregelventil 30 eingestellte Druck herrscht. Dadurch wird auch der Kraftspeicher 58 erneut gespannt und steht für den nächsten Bremsvorgang als Quelle der Bremskraft zur Verfügung.

Erfolgen kurz aufeinander mehrere Brems- und Lösevorgänge, so kann der Fall eintreten, dass sich auf der Seite der Zylinderkammer 44 ein unerwünscht hoher Druck aufbaut. Dieser Druck kann durch ein das Rückschlagventil 56 überbrückendes Überdruckventil 60 abgebaut werden. Zweckmässigerweise wird das Überdruckventil 60 gemeinsam mit dem Druckregelventil 30 auf den gleichen Lösedruck von beispielsweise 35 bar eingestellt.

Wird der Motor des Zugfahrzeugs abgestellt und damit die Druckquelle für das Hydrauliksystem ausser Betrieb gesetzt, so bleibt zunächst der Lösedruck in der Bremsleitung 10 erhalten, es sei denn, es wird das Bremspedal 36 betätigt, um bewusst eine Abbremsung des Anhängers herbeizuführen. Mit Hilfe der Drosselöffnung 38 tritt jedoch auch eine Bremsung des Anhängers ein, wenn die Druckquelle ausser Betrieb gesetzt wird und das Bremspedal nicht betätigt wird. Es baut sich dann über die Drosselöffnung 38 der Druck in der Bremsleitung ab, so dass die Bremskraft des Kraftspeichers 58 wirksam werden kann.

Sobald der Motor des Zugfahrzeugs in Betrieb gesetzt und damit die Druckquelle wieder wirksam wird, baut sich der Lösedruck in der Bremsleitung 10 wieder auf und die Bremsen des Anhängers werden gelöst.

Um bei abgekuppeltem und gebremstem Anhänger den Anhänger manövrierfähig zu machen, ist es erforderlich, die Bremse zu lösen und dabei den Druck des Kraftspeichers 58 zu überwinden. Zu diesem Zweck ist am Anhänger eine mit einem kleinen Vorratsbehälter 62 für Hydraulikflüssigkeit verbundene Handpumpe 64 angeordnet, deren druckseitiger Anschluss 66 mit einem dem Kupplungsteilstück 12a entsprechenden Kupplungsteilstück 68 versehen ist, so dass das Teilstück 10b der Bremsleitung 10 nach dem Lösen vom schlepperseitigen Teilstück 10a mit der Handpumpe 64 verbunden werden kann, wie dies in unterbrochenen Linien in den Fig. 1 und 2 dargestellt ist. Es kann nun durch Betätigung der Handpumpe 64 im Bremsleitungsteilstück 10b der zum Lösen der Bremse erforderliche Druck aufgebaut werden. Am Betätigungshebel 70 der Handpumpe 64 ist ein Löseknopf 72 angeordnet, bei dessen Betätigung der druckseitige Anschluss 66 der Handpumpe 64 unmittelbar mit dem Vorratsbehälter 62 verbunden wird, so dass sich der Druck im Bremsleitungsteilstück 10b rasch abbaut und die Bremse wieder in Bremsstellung bewegt werden kann.

Handpumpen dieser Art sind an sich bekannt, sie wird deshalb hier nicht näher erläutert.

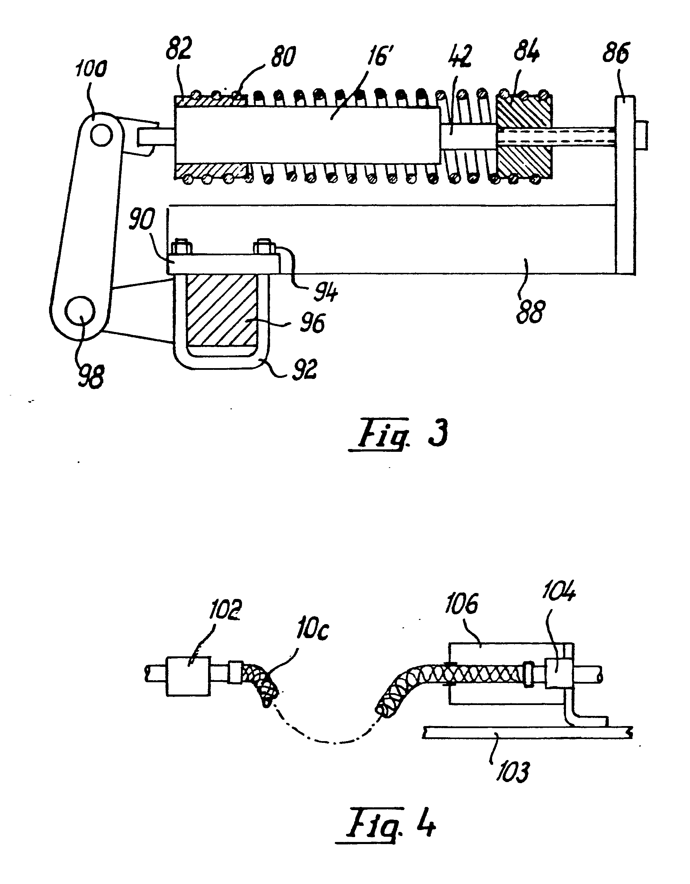

Besonders zweckmässig ist eine Ausführungsform, bei welcher der Kraftspeicher nicht mit einem Medium arbeitet, welches möglicherweise durch Leckverluste allmählich seine Wirksamkeit verlieren kann. Um ein dadurch mögliches Absinken der Bremskraft zu vermeiden, ist bei dem in Fig. 3 dargestellten Ausführungsbeispiel anstelle eines Gasdruckspeichers ein mechanischer Federspeicher in Form einer Zugfeder 80 vorgesehen, welche den in diesem Fall einfachwirkend ausgebildeten Bremszylinder 16' konzentrisch umschliesst. Durch den Wegfall des Druckspeichers 58 können auch das Rückschlagventil 56 und das Überdruckventil 60 mit der entsprechenden Abzweigung von der Bremsleitung 10 entfallen. Die Zugfeder 80 greift einerseits an einem auf dem Bremszylinder 16' befestigten Gewindestück 82 und andererseits an einem auf der Kolbenstange 42 verstellbar angebrachten Gewindestück 84 an. Die Kolbenstange 42 ist an einem Widerlager 86 eines Lagerbocks 88 angelenkt, der sich vom Widerlager 86 bis etwa zum entgegengesetzten Ende des Bremszylinders 16' erstreckt, wo der Lagerbock 88 mit seitlichen Flanschen 90 versehen ist, die zu beiden Seiten des Lagerbocks 88 mit Bohrungen versehen sind, durch welche die mit Gewindeenden versehenen Schenkel eines U-förmigen Befestigungsbügels 92 gesteckt werden können, der dazu geeignet ist, den Lagerbock mit Hilfe von Muttern 94 auf einer Fahrzeugachse 96 festzuspannen. An der Fahrzeugachse ist in bekannter Weise eine zur Fahrzeugachse 96 parallel verlaufende Bremswelle 98 gelagert, welche drehfest mit einem Bremshebel 100 verbunden ist, an dessen freies Ende der Bremszylinder 16' angeschlossen ist.

Es ergibt sich somit eine leicht nachträglich anbringbare Montageeinheit, wobei beispielsweise das Rückschlagventil 56 und das Überdruckventil 60 noch in das Gehäuse des Bremszylinders 16' einbezogen sein können. Es ist dann lediglich in geeigneter Weise am Fahrzeug der Bremsleitungsabschnitt 10b zu verlegen und die Handpumpe 64 mit dem Vorratsbehälter 62, vorzugsweise im Bereich der Fahrzeugdeichsel, anzubringen.

Damit gefährliche Verschmutzungen der Fahrbahn auch für den Fall verhindert werden können, dass die Bremsleitung 10 zwischen Zugfahrzeug und Anhänger abreisst, beispielsweise wenn sich unvorhergesehen die mechanische Kupplungsverbindung zwischen beiden Fahrzeugen löst, ist eine in Fig. 4 dargestellte Massnahme vorgesehen. Die Kupplung 12 wird ersetzt durch ein Bremsleitungsteilstück 10c, welches an beiden Enden unterschiedliche Kupplungen trägt, und zwar an seinem dem Zugfahrzeug zugewandten Ende eine an sich bereits bekannte und deshalb hier nicht näher erläuterte Kupplung, welche nur in druckfreiem Zustand durch Zug gelöst werden kann und welche im gelösten Zustand die Leitung sperrt. Diese Kupplung ist mit 102 bezeichnet und dient üblicherweise als Kupplung beim Verbinden von Zugfahrzeug und Anhänger oder beim Trennen dieser beiden Fahrzeuge.

Am anderen, dem Anhänger 103 zugewandten Ende des Bremsleitungsteilstücks 10c ist eine ebenfalls durch Zug lösbare Kupplung 104 vorgesehen, welche sich beim Überschreiten einer vorgegebenen Zugkraft auch unter Druck lösen lässt. Die Kupplung 104 wird von einem Ölauffangbehälter 106 umschlossen, der gegenüber den beiden durch diese Kupplung 104 verbundenen Teilstücken 10b und 10c der Bremsleitung abgedichtet ist und der zumindest auf einem dieser Bremsleitungsteilstücke 10b bzw. 10c verschieblich angeordnet ist.

Tritt nun eine die normalen Betriebsverhältnisse überschreitende Zugkraft in der Bremsleitung 10 auf, so wird sich die Kupplung 104 lösen, wobei unter dem Einfluss der Zugkraft zumindest eines der beiden Bremsleitungsteilstücke 10b oder 10c etwas aus dem Ölauffangbehälter 106 herausgezogen werden wird, so dass sich die Kupplungshälften voneinander trennen und das in der Leitung befindliche Öl in den Ölauffangbehälter 106 entweichen wird. Dadurch wird die Kupplung 102 drucklos, so dass nun auch diese Kupplung sich lösen wird, wenn die Zugkraft anhält.

Die vorstehend beschriebene Bremse weist einen verhältnismässig einfachen und weitgehend wartungsfreien Aufbau auf, so dass sie sich besonders für den rauhen landwirtschaftlichen Betrieb eignet. Da am Schlepper bzw. am Zugfahrzeug in der Regel nur das Steuergehäuse 14 angebracht und mit der dort bereits vorhandenen Druckquelle und dem Rücklauf verbunden, sowie zur Betätigung an das Bremspedal angeschlossen werden muss, können praktisch alle Schlepperbauarten mit diesem Steuergehäuse nachträglich versehen werden. Auch der Aufwand an Einrichtungen am Anhänger ist vergleichsweise gering, wobei andererseits die Zuverlässigkeit der Bremse bisher bekannt gewordenen hydraulischen Bremsen für landwirtschaftliche Anhänger überlegen ist, insbesondere auch deshalb, weil auch bei Ausfall der Druckquelle jederzeit zuverlässig die erforderliche Bremskraft zur Verfügung steht. Ausserdem stellt sich die Bremse selbsttätig hydraulisch nach.

Die Bremse ist ohne weiteres auch für einen zweiten Anhänger geeignet, dabei besteht die Möglichkeit, auf einfache Weise die Bremswirkung für die beiden Anhänger unterschiedlich einzustellen, z.B. entsprechend der jeweiligen Belastung, so dass insbesondere verhindert werden kann, dass der nachfolgende Anhänger den vorauslaufenden Anhänger schiebt und gegebenenfalls aus der Spur schiebt.

Insbesondere bei der Bauform mit einem mechanischen Kraftspeicher kann die Bremse sowohl als Betriebs-, wie auch als Feststellbremse benutzt werden, so dass andere, zusätzliche Bremseinrichtungen entfallen können.

**Patentansprüche**

1. Hydraulische Bremse, insbesondere für schleppergezogene land- und forstwirtschaftliche Anhänger, mit einem einer Druckquelle nachschaltbaren Bremsventil (34), einem Bremszylinder (16) und einer das Bremsventil (34) mit dem Bremszylinder (16) verbindenden Bremsleitung (10), wobei der Kolben (40) in Richtung auf seine Bremsstellung ständig durch einen Kraftspeicher (58, 80) belastet und in der Gegenrichtung aus der Bremsleitung (10) beaufschlagbar ist, die Bremsleitung (10) mit der Druckquelle und über ein Druckregelventil (30) mit einem Rücklauf (26) zur Druckquelle verbunden, sowie bei Bremsbetätigung über das dann geöffnete Bremsventil (34) direkt mit dem Rücklauf (26) verbindbar ist, und das Druckregelventil (30) derart ausgelegt ist, dass es bei ungeöffnetem Bremsventil (34) den Druck in der Bremsleitung grösser hält als die Kraft des Kraftspeichers (58), dadurch gekennzeichnet, dass das Druckregelventil (30) durch eine Drosselöffnung (38) zwischen Bremsleitung (10) und Rücklauf (26) überbrückt ist.

2. Bremse nach Anspruch 1, dadurch gekennzeichnet, dass das Bremsventil (34), das Druckregelventil (30) und die Drosselöffnung (38) an einem Zugfahrzeug, der Bremszylinder (16) und der Kraftspeicher (58, 80) an einem Anhänger angeordnet sind.

3. Bremse nach einem der vorhergehenden Ansprüche, dadurch gekennzeichnet, dass der Kraftspeicher als Gasdruckspeicher (58) und der Bremszylinder (16) als doppeltwirkender Zylinder ausgebildet ist, dessen mit dem Bremsgestänge verbundene erste Kolbenseite (52) gleichsinnig mit der Speicherkraft eines ständig auf den Kolben (40) einwirkenden Kraftspeichers (58) über ein durch den Druck der Druckquelle zu öffnendes Rückschlagventil (56) aus der Bremsleitung (10) und dessen zweite Kolbenseite (54) unmittelbar aus der Bremsleitung (10) beaufschlagbar ist, und dass die wirksame Fläche der zweiten Kolbenseite (54) grösser ist als die wirksame Fläche der ersten Kolbenseite (52).

4. Bremse nach Anspruch 3, dadurch gekennzeichnet, dass das Rückschlagventil (56) durch ein in entgegengesetzter Richtung wirksames Überdruckventil (60) überbrückt ist.

5. Bremse nach einem der Ansprüche 1 oder 2, dadurch gekennzeichnet, dass der Kraftspeicher als Federspeicher (80) und der Bremszylinder (16') einfachwirkend ausgebildet ist.

6. Bremse nach Anspruch 5, dadurch gekennzeichnet, dass der Federspeicher als Schraubenfeder (80) ausgebildet ist.

7. Bremse nach Anspruch 6, dadurch gekennzeichnet, dass die Schraubenfeder (80) den Bremszylinder (16') umschliesst.

8. Bremse nach Anspruch 6, dadurch gekennzeichnet, dass die Schraubenfeder (80) im Bremszylinder (16') angeordnet ist.

9. Bremse nach einem der Ansprüche 6 bis 8, dadurch gekennzeichnet, dass die Schraubenfeder (80) als Zugfeder ausgebildet ist.

10. Bremse nach einem der vorhergehenden Ansprüche, dadurch gekennzeichnet, dass der Anhänger mit einem Vorrat (62) an Hydraulikflüssigkeit und einer diesem Vorrat zugeordneten Handpumpe (64) versehen ist, an welche der am Anhänger befindliche Teil (10b) der Bremsleitung (10) nach dem Lösen vom schlepperseitigen Teil (10a) der Bremsleitung ankuppelbar ist, und dass die Handpumpe mit einem Rücklaufventil zur Verbindung der Bremsleitung (10) mit dem Vorrat (62) versehen ist.

11. Bremse nach einem der vorhergehenden Ansprüche, dadurch gekennzeichnet, dass das Bremsventil (34), das Druckregelventil (30) und gegebenenfalls die Drosselöffnung (38) in einem gemeinsamen Gehäuse angeordnet sind.

12. Bremse nach Anspruch 4, dadurch gekennzeichnet, dass der Bremszylinder (16), das Rückschlagventil (56) und das Überdruckventil (60) in einem gemeinsamen Gehäuse angeordnet sind.

13. Bremse nach einem der vorhergehenden Ansprüche, dadurch gekennzeichnet, dass die lösbare Kupplung (102) an dem dem Zugfahrzeug zugewandten Ende eines Verbindungsabschnitts (10c) der Bremsleitung (10) angeordnet und als nur in druckfreiem Zustand durch Zug lösbare und in gelöstem Zustand die Leitung sperrende Kupplung ausgebildet ist, dass an dem dem Anhänger (104) zugewandten Ende des Verbindungsabschnitts (10c) eine sich beim Überschreiten einer vorgegebenen Zugbelastung trennende Kupplung (106) angeordnet ist, und dass die beiden durch Zug trennbaren Teilstücke (10b, 10c) der dem Anhänger (104) zugewandten Kupplung (106) von einem die Bremsleitung (10) dicht umschliessenden, zumindest auf einem der durch diese Kupplung (106) verbundenen Bremsleitungsabschnitte (10b, 10c) verschieblichen Ölauffangbehälter (108) umschlossen sind.

14. Bremse nach einem der vorhergehenden Ansprüche, dadurch gekennzeichnet, dass der Bremszylinder (16') mit dem Kraftspeicher (80) auf einem von einer Fahrzeugachse (96) befestigbaren Lagerbock (88) angeordnet ist.

**Revendications**

1. Frein hydraulique, notamment pour remorques traînées par un tracteur et utilisées en agriculture et en sylviculture, qui comporte un robinet de frein (34), placé en aval d'une source de pression, un cylindre de frein (16) et un conduit de frein (10) reliant le robinet de frein (34) au cylindre de frein (16) et dans lequel le piston (40) est constamment soumis à une pression exercée par un accumulateur d'énergie (58, 80) et tendant à le pousser dans sa position de freinage, et peut être soumis à une pression s'exerçant en sens inverse et provenant du conduit de frein (10), le conduit de frein (10) étant relié à la source de pression et, par l'intermédiaire d'une soupape régulatrice de pression (30), à un conduit de retour (26) à la source de pression, la commande de frein étant, lorsque le robinet de frein (34) est ouvert, reliée directement au conduit de retour (26) et la soupape régulatrice de pression (30) étant construite et montée de telle manière que, lorsque le robinet de frein (34) est ouvert, elle maintient dans le conduit de frein une pression supérieure à la pression exercée par l'accumulateur d'énergie (58), caractérisé en ce que la soupape régulatrice de pression (30) est doublée par une ouverture rétrécie (38) montée en parallèle avec elle entre le conduit de frein (10) et le conduit de retour (26).

2. Frein suivant la revendication 1 caractérisé en ce que le robinet de frein (34), la soupape régulatrice de pression (30) et l'ouverture rétrécie (38) sont montés sur un véhicule tracteur tandis que le cylindre de frein (16) et l'accumulateur d'énergie (58, 80) sont montés sur une remorque.

3. Frein suivant l'une quelconque des revendications précédentes caractérisé en ce que l'accumulateur d'énergie est un accumulateur de gaz sous pression (58), en ce que le cylindre de frein (16) est un cylindre à double action dans lequel la première face de piston (52), reliée au système de tiges du frein, est soumise à une pression qui, provenant du conduit de frein (10), se transmet au travers d'une soupape d'arrêt (56), qui s'ouvre sous l'action de la pression de la source de pression, et s'exerce dans le même sens que la force mise en réserve par un accumulateur d'énergie (58), qui agit en permanence sur le piston (40), et dans lequel la deuxième face de piston (54) est directement soumise à la pression provenant du conduit de frein (10), et en ce que la surface utile de la deuxième face de piston (54) est plus grande que la surface utile de la première face de piston (52).

4. Frein suivant la revendication 3 caractérisé en ce que la soupape d'arrêt (56) est doublée par une soupape de surpression (60) montée en parallèle avec elle et fonctionnant en sens inverse.

5. Frein suivant l'une quelconque des revendications 1 ou 2 caractérisé en ce que l'accumulateur d'énergie est un accumulateur à ressort (80) et le cylindre de frein (16') est à simple action.

6. Frein suivant la revendication 5 caractérisé en ce que l'accumulateur à ressort est un ressort hélicoïdal (80).

7. Frein suivant la revendication 6 caractérisé en ce que le ressort hélicoïdal (80) entoure le cylindre de frein (16').

8. Frein suivant la revendication 6 caractérisé en ce que le ressort hélicoïdal (80) est monté dans le cylindre de frein (16').

9. Frein suivant l'une quelconque des revendications 6 à 8 caractérisé en ce que le ressort hélicoïdal (80) est un ressort de traction.

10. Frein suivant l'une quelconque des revendications précédentes caractérisé en ce que la remorque est munie d'une réserve (62) de liquide pour le frein hydraulique et d'une pompe à main (64) associée à cette réserve et à laquelle on peut relier, par un accouplement, la partie (10b) du conduit de frein (10) qui est située du côté de la remorque après la séparation de la partie (10a) du conduit de frein qui est située du côté du tracteur et en ce que la pompe à main est munie d'une soupape de retour pour la liaison entre le conduit de frein (10) et la réserve (62).

11. Frein suivant l'une quelconque des revendications précédentes caractérisé en ce que le robinet de frein (34), la soupape régulatrice de pression (30) et, le cas échéant, l'ouverture rétrécie (38) sont logés dans une enveloppe commune.

12. Frein suivant la revendication 4 caractérisé en ce que le cylindre de frein (16), la soupape d'arrêt (56) et la soupape de surpression (60) sont logés dans une enveloppe commune.

13. Frein suivant l'une quelconque des revendications précédentes caractérisé en ce que l'accouplement détachable (102) qui se trouve à l'extrémité d'une partie (10c) du conduit de frein (10) située du côté du véhicule est fait de telle manière qu'il ne peut se détacher par traction qu'en l'absence de pression et qu'une fois détaché il ferme le conduit, tandis que l'extrémité de la partie (10c) du conduit de frein située du côté de la remorque (104) comporte un accouplement (106) qui se détache lorsque l'effort de traction dépasse une valeur déterminée, et en ce que les deux parties (10b, 10c), de l'accouplement (106) situé du côté de la remorque (104), qui peuvent être séparées par traction, sont entourées par un récipient collecteur d'huile (108) qui entoure d'une manière étanche le conduit de frein (10) et peut se déplacer au moins sur l'une des parties (10b, 10c) du conduit de frein reliées par cet accouplement (106).

14. Frein suivant l'une quelconque des revendications précédentes caractérisé en ce que le cylindre de frein (16') et l'accumulateur d'énergie (80) sont montés sur un support de palier (88) pouvant être fixé par l'un des essieux (96) du véhicule.

**Claims**

1. A hydraulic brake, more specially for tractor drawn trailers for use in agriculture and forestry, comprising a brake valve (34) with an input to be joined up with a liquid power supply, a brake cylinder (16) and a brake line (10) forming a connection between the brake valve (34) and the brake cylinder (16), whose piston (40) is loaded all the time into its brake-on position by a power accumulator (58 and 80) and may be acted on in the opposite direction by way of the brake line (10), the said brake line (10) is joined up with the liquid power supply and may be joined by way of a pressure controlling valve (30) with a return line (26) running back to the liquid power supply and for braking may be joined up by way of the braking valve (34), that is then opened, with the return line (26) directly and the pressure controlling valve (30) is designed in such a way that when the braking valve (34) is unopened it keeps the pressure in the brake line at a higher value than the force of the accumulator (58), characterized in that the pressure controlling valve (30) is shunted by a choke port (38) between the brake line (10) and the return line (26).

2. The brake as claimed in claim 1 characterized in that the brake valve (34), the pressure controlling valve (30) and the choke port (38) are placed on a towing vehicle and the brake cylinder (16) and the accumulator (58 and 80) are placed on a trailer.

3. The brake as claimed in claim 1 or claim 2 characterized in that the accumulator is in the form of a gas pressure accumulator (58) and the brake cylinder (16) is in the form of a double acting cylinder, whose first piston face (52), that is joined with the braking linkage, is able to be acted upon in the same direction by the accumulator force of a power accumulator (58), acting on the piston (40) at all times, by way of a check valve (56), to be opened by the pressure of the power liquid supply, from the brake line (10) and whose second piston face (54) may be acted directly from the brake line (10), and in that the acting face of the second piston face (54) is larger than the acting face of the first piston face (52).

4. The brake as claimed in claim 3 characterized in that the check valve (56) is shunted by an overpressure valve (60) acting in the opposite direction.

5. The brake as claimed in claim 1 or claim 2 characterized in that the power accumulator is in the form of a spring accumulator (80) and the brake cylinder (16') is a single acting cylinder.

6. The brake as claimed in claim 5 characterized in that the spring accumulator is designed in the form of a helical spring (80).

7. The brake as claimed in claim 6 characterized in that the helical spring (80) is placed round the brake cylinder (16').

8. The brake as claimed in claim 6 characterized in that the helical spring (80) is placed in the brake cylinder (16').

9. The brake as claimed in any one of claims 6 to 8 characterized in that the helical spring (80) is designed in the form of a tension spring.

10. The brake as claimed in any one of the claims hereinbefore characterized in that the trailer has a tank (62) of hydraulic liquid and a hand pump (64) for use therewith, and the part (10b), placed on the trailer, of the brake line (10) may be joined up therewith after undoing it from the part (10a) on the tractor of the brake line and in that the hand pump has a return valve for producting a connection of the brake line (10) with the tank (62).

11. The brake as claimed in any one of the claims hereinbefore characterized in that the brake valve (34), the pressure controlling valve (30) and if desired the choke port (38) are placed within a common housing.

12. The brake as claimed in claim 4 characterized in that the brake cylinder (16), the check valve (56) and the over-pressure valve (60) are placed in a common housing.

13. The brake as claimed in any one of the claims hereinbefore characterized in that the coupling (102) is placed at the end, nearest to the towing vehicle, of a connection part (10c) of the brake line (10) and is so designed that it may only be unjoined in the pressure-free condition by pulling thereon and takes the form of a coupling shutting off the line in the unjoined condition, that at the end, nearest to the trailer (104), of the connection part (10c) there is a coupling (106) that is automatically uncoupled at a given pulling force and in that the two parts (10b and 10c), able to be separated by a pulling force, of the coupling (106) nearest the trailer (104) are placed within an oil trap (108), said trap being placed tightly round the brake line (10) and being able to be pushed along at least of one of the parts (10b and 10c) of the brake line joined by this coupling (106).

14. The brake as claimed in an one of the claims hereinbefore characterized in that the brake cylinder (16') with the power accumulator (80) is placed on a support block (88) able to be fixed by a vehicle axle (96).

_Fig. 1_

*Fig. 2*

_Fig._ 3

_Fig._ 4